# EUROPÄISCHE PATENTANMELDUNG

(11) **EP 2 034 253 A2**
(43) Veröffentlichungstag der Anmeldung: **11.03.2009**
(21) Anmeldenummer: 08105296.1
(22) Anmeldetag: 10.09.2008
(51) Int. Cl.: F24J 3/08

(54) **Energiesäule**

(30) Priorität: 10.09.2007 AT 14132007
(71) Anmelder: Econicsystems innovative Kühllösungen GesmbH, 3571 Gars am Kamp (AT)
(72) Erfinder: Bayer, Christian, 2084 Weitersfeld (AT); Hedestam, Bengt, 3381 Golling/Erlauf (AT); Bokesch, Ernst, 3500 Krems (AT)
(74) Vertreter: Müllner, Martin

(57) **Zusammenfassung**

Energiesäule, insbesondere Pfeiler mit in diesen geführten Leitungen, die von einem Wärmeübertragungsmedium durchströmbar sind. Um eine einfache Herstellung einer solchen Energiesäule zu ermöglichen, ist vorgesehen, dass die Leitungen ein Register (4) bilden, wobei zwischen einer Vorlaufkammer (5) und einer Rücklaufkammer (6), die beide im Wesentlichen parallel zur Längsachse des Pfeilers verlaufen, parallel geschaltete bogenförmig verlaufende Verbindungsleitungen (7) angeordnet sind und eine Anschlussleitung (8) in den unteren Endbereich einer der Kammern (5, 6) mündet.

## Beschreibung

### Technisches Gebiet

Die Erfindung betrifft eine Energiesäule gemäß dem Oberbegriff des Anspruchs 1.

### Stand der Technik

Es ist üblich, bei größeren Bauwerken armierte Betonsäulen zum Abtragen der Lasten herzustellen. Es ist auch schon bekannt, in diese Betonsäulen Leitungen einzubringen, über die dann Erdwärme abgezogen werden kann.

Derartige Energiesäulen ermöglichen es also, Wärme aus tieferen Erdschichten zu nutzen, oder auch umgekehrt überschüssige Wärme, wie sie z.B. bei Klimaanlagen anfällt, in den Boden abzuleiten, sodass sie dann später genützt werden kann.

Bei bekannten derartigen Energiesäulen werden flexible Leitungen in eine Armierung der Säule vor deren Herstellung eingelegt. Diese Armierungen sind im Wesentlichen zylindrisch, und die Leitungen verlaufen an der Innenseite des Zylinders vom oberen Ende der Armierung etwa in Längsrichtung zum unteren Ende, werden dort um 180° zurückgebogen und führen dann wieder zum oberen Ende zurück. Damit eine gute Wärmeübertragung gewährleistet ist, sind mehrere (z.B. sechs oder acht) derartige Leitungsschlaufen erforderlich. Das Einfädeln dieser Leitungen ist mit erheblichem Arbeitsaufwand verbunden, und beim Zurückbiegen um 180° werden oft die vorgeschriebenen Minimalradien unterschritten, wodurch es zum Knicken der Leitungen und damit zu Querschnittsverminderungen kommt. Dies kann auch noch nach dem Einfädeln der Leitungen passieren, wenn die Armierung in die Bohrung eingesetzt und die Bohrung mit Beton ausgegossen wird, da der Beton die Leitungen bewegen kann, selbst dann, wenn sie an vielen Stellen an der Armierung befestigt sind. Es ist immer erforderlich, die Leitungen an vielen Stellen mit der Armierung zu verbinden, um die Leitungen am Aufschwimmen während des Ausgießens der Schalung zu hindern. Insgesamt erfordert also das Einfädeln der Leitungen einen sehr erheblichen Arbeitsaufwand vor Ort, wobei nicht immer optimale Bedingungen herrschen.

Besonders problematisch ist es, wenn die Energiesäulen so hoch sind, dass die Armierungen gestoßen werden müssen. In diesem Fall sind alle Leitungsschlaufen an der Stoßstelle miteinander zu verbinden, d.h. es sind pro Energiesäule zwölf oder sechzehn Verbindungsstellen notwendig.

### Darstellung der Erfindung

Ziel der Erfindung ist es, diese Nachteile zu vermeiden und eine Energiesäule der eingangs erwähnten Art vorzuschlagen, die sich einfach herstellen lässt.

Erfindungsgemäß wird dies bei einer Energiesäule der eingangs erwähnten Art durch die kennzeichnenden Merkmale des Anspruchs 1 erreicht.

Durch die vorgeschlagenen Maßnahmen ergibt sich der Vorteil, dass die Register in einer Werkstatt unter optimalen Bedingungen hergestellt werden können. Dabei ergibt sich der Vorteil, dass die erforderlichen Verbindungen der einzelnen Leitungsabschnitte durch Schweißen hergestellt werden können und diese Verbindungen unter optimalen Bedingungen hergestellt und überprüft werden können. Dadurch wird die Gefahr, dass die Leitungen nach der Fertigstellung der Energiesäule Undichtigkeiten zeigen, minimiert. Es gibt auch keine 180°-Biegung am unteren Ende der Energiesäule, wo es zu einem Knick kommen könnte. Alle bogenförmig verlaufenden Verbindungsleitungen haben einen konstanten Biegeradius und können auf ihrer gesamten Länge mit der Armierung verbunden werden, sodass keine Gefahr besteht, dass sie beim Ausgießen der Erdbohrung bewegt werden. Eine der beiden Kammern ist in ihrem unteren Endbereich mit einer Anschlussleitung versehen; um das Register zu füllen, bringt man die Flüssigkeit über diese Anschlussleitung ein, sodass das Register von unten nach oben gefüllt wird und die Luft nach oben entweicht.

Durch die Merkmale des Anspruchs 2 ergibt sich der Vorteil, dass die Register sehr einfach hergestellt werden können. Dabei ist es auch möglich, ebene Register herzustellen und sie erst beim Einbau in die entsprechend gebogene Form zu bringen. Dadurch können die Transportvolumina entsprechend gering gehalten werden. Entsprechende Register werden bereits in großer Stückzahl für Fußbodenheizungen produziert. Man braucht nur die Länge und Breite der Register entsprechend zu adaptieren, damit man für die vorliegende Erfindung geeignete Register erhält.

Solche Register für Fußbodenheizungen weisen allerdings meist nur eine geringe Temperaturbeständigkeit auf, z.B. 40°. Für die Zwecke der vorliegenden Erfindung ist es aber günstig, das Merkmal von Anspruch 3 vorzusehen, weil unter Umständen auch Abwärme auf relativ hohem Temperaturniveau für eine spätere Nutzung in die Erde eingeleitet werden soll.

Durch die Merkmale des Anspruchs 4 ergibt sich der Vorteil, dass beim Befüllen des Registers auch die Luft in den Verbindungsleitungen rasch und sicher nach oben entweicht. Aber auch ohne diese Maßnahme wird durch die Strömung im Betrieb nach und nach die Luft aus den Verbindungsleitungen ausgetrieben, man muss dann allerdings länger entlüften.

Durch die Merkmale des Anspruchs 5 ergibt sich der Vorteil, dass die Register in einer Größe gehalten werden können, mit der sie einfach transportiert werden können, und andererseits können auch sehr hohe Energiesäulen mit zwei oder mehr Registern bestückt werden. Aufgrund der geringeren Längen der Verbindungsleitungen der jeweils oberen Register vergrößert sich der Abstand der Kammern, sodass die Anschlussleitungen des unteren Registers sehr einfach zwischen den Kammern des oberen Registers nach oben geführt werden können.

Ein weiteres Ziel der Erfindung ist es, ein Verfahren zur Herstellung einer erfindungsgemäßen Energiesäule vorzuschlagen.

Ausgehend von einem Verfahren gemäß dem Oberbegriff des Anspruchs 6 werden die kennzeichnenden Merkmale des Anspruchs 6 vorgeschlagen. Dabei wird durch die Verwendung des Montagerohres der Einbau der Register wesentlich erleichtert. Außerdem lassen sich die Register erheblich leichter mit der Armierung verbinden als in Schlingen verlegte Leitungen, wie dies bei der bekannten Lösung erforderlich ist. Dabei kann ein ebenes Register sehr einfach hergestellt und an die Baustelle transportiert werden. Auch der Einbau eines solchen Registers in die Armierung lässt sich mit dem Montagerohr sehr einfach bewerkstelligen.

Besonders zweckmäßig ist es, das Register vor dem Ausgießen der Erdbohrung mit Flüssigkeit zu füllen und unter Druck zu setzen. Einerseits erkennt man auf diese Art eventuelle Lecks, andererseits erhöht dies den Widerstand der Register gegen den doch erheblichen Betondruck (solange der Beton flüssig ist) ganz erheblich.

### Kurze Beschreibung der Abbildungen der Zeichnungen

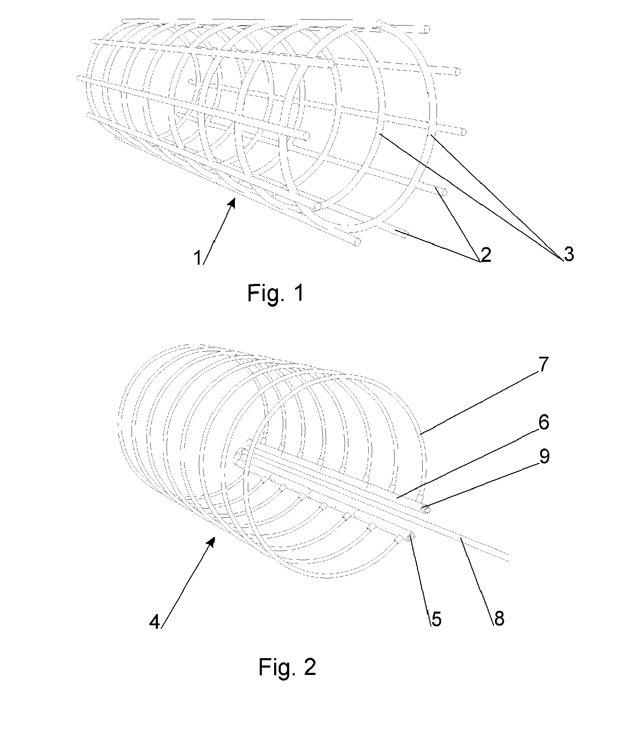

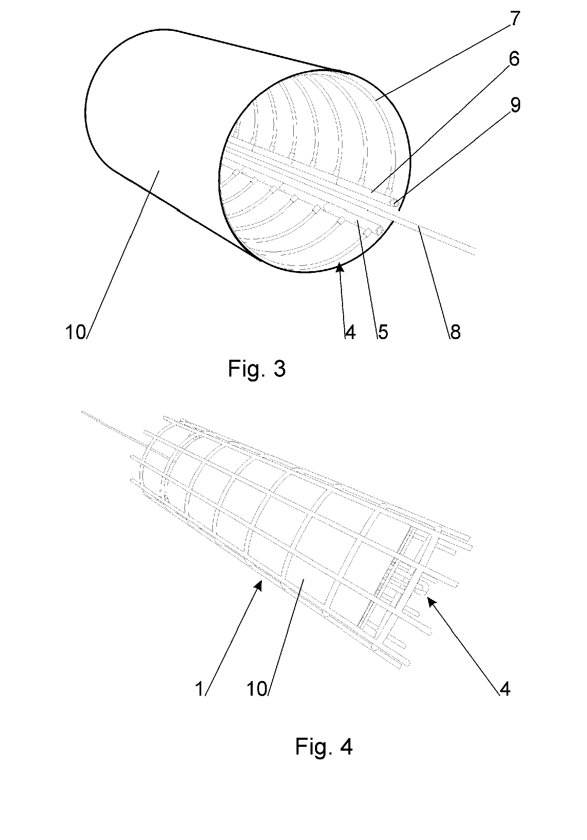

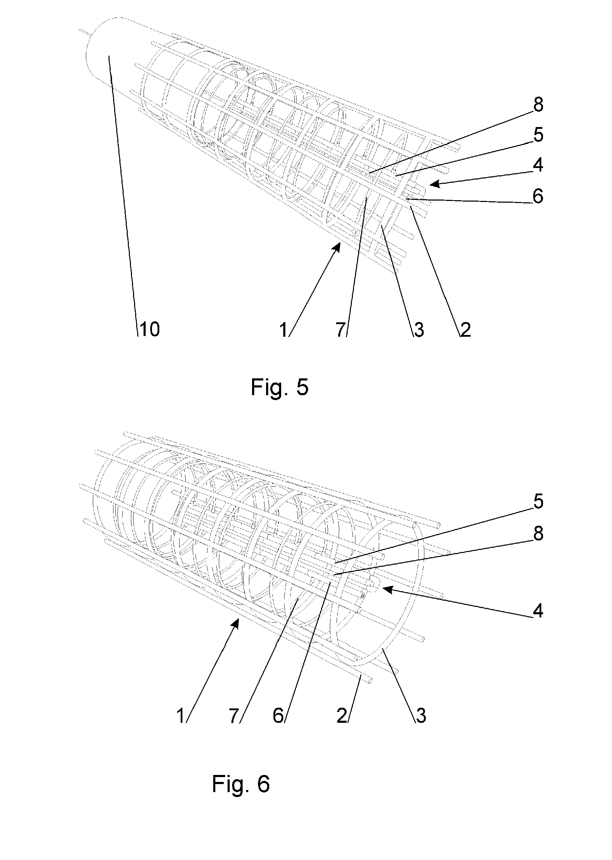

Die Erfindung wird nun anhand der Zeichnungen näher erläutert, die schematisch die Herstellung einer erfindungsgemäßen Energiesäule zeigen. Es zeigt: Fig. 1 eine herkömmliche Armierung einer Säule; Fig. 2 ein eingerolltes Register samt Anschlussleitungen; Fig. 3 ein in ein Montagerohr eingeschobenes eingerolltes Register; Fig. 4 ein in die Armierung gemäß Fig. 1 eingeschobenes Montagerohr samt Register; Fig. 5 das Montagerohr während des Herausziehens aus der Armierung; und Fig. 6 ein in die Armierung eingebrachtes Register nach dem Herausziehen des Montagerohrs.

### Bester Weg zur Ausführung der Erfindung

Fig. 1 zeigt eine übliche Armierung 1, wie sie für die Herstellung einer Säule aus erhärtender Masse, wie z.B. Beton, verwendet wird. Diese Armierung 1 weist Längsstäbe 2 auf, die mittels Ringstäben 3 miteinander verbunden sind. Bei der Herstellung einer erfindungsgemäßen Energiesäule wird eine solche Armierung 1 in ein nicht dargestelltes Bohrloch eingesetzt, das mit einer erhärtenden Masse, wie z.B. Beton, ausgefüllt wird.

Fig. 2 zeigt ein eingerolltes Register 4. Dieses weist eine Vorlaufkammer 5 und eine Rücklaufkammer 6 auf, die im Wesentlichen parallel zueinander verlaufen und die über Verbindungsleitungen 7 miteinander hydraulisch verbunden sind. Dabei ist die Vorlaufkammer 5 an ihrem einen Ende, und zwar jenem, das bei Einsatz des Registers 4 in eine im Wesentlichen vertikal stehende Armierung 1 unten liegt, mit einer Zulaufleitung 8 verbunden. Die Rücklaufkammer 6 ist an ihrem oberen Ende ("oben" bezieht sich wiederum auf den in die Armierung 1 eingesetzten Zustand) mit einer weiteren Anschlussleitung 9 verbunden.

Die Verbindungsleitungen 7 können bei eingerolltem Register 4, das vertikal steht, leicht schräg nach oben verlaufen, um das Austreiben von Luft bei der Befüllung des Registers 4 zu erleichtern.

Das Register 4 ist zweckmäßigerweise aus Kunststoffrohren aufgebaut und kann als ebenes Register hergestellt werden, wobei die einzelnen Rohre miteinander verschweißt werden, wodurch ein hohes Maß an Dichtheit erreichbar ist. Ein solches ebenes Register erfordert beim Transport an eine Baustelle nur wenig Platz.

Wie aus der Fig. 3 zu ersehen ist, wird das Register 4 in ein Montagerohr 10 (z.B. ein Polo-Kal-Rohr) eingeschoben, nachdem das ebene Register entsprechend zusammengerollt wurde. Dabei wird die Anschlussleitung 8 zwischen der Vor- und der Rücklaufkammer 5, 6 geführt. Das zusammengerollte Register 4 liegt dabei aufgrund der elastischen Verformung der Verbindungsleitungen 7 an der Innenwand des Montagerohres 10 an.

Nach dem Einsetzen des Montagerohres 10 samt dem Register 4 in die Armierung 1, wie dies aus der Fig. 4 zu ersehen ist, wird das Montagerohr 10 aus der Armierung 1 herausgezogen (Fig. 5), wobei das Register 4 innerhalb der Armierung 1 in Position gehalten wird. Das Register 4 liegt nun federnd an der Armierung 1 an. Nun kann das Register 4 mit der Armierung 1 verbunden werden.

Nach der Fixierung des Registers 4 an der Armierung 1 kann die Armierung 1 in das Bohrloch eingebracht und dieses mit einer erhärtenden Masse, wie z.B. Beton, ausgefüllt werden.

Es ist dabei zweckmäßig, zuvor das Register 4 zu füllen und unter Druck zu setzen. Einerseits erkennt man dabei Leckstellen, anderseits widersteht das Register, wenn es unter Druck gesetzt ist, dem Betondruck wesentlich besser.

Bei höheren Energiesäulen können auch zwei oder mehr Register 4 in die Armierung 1 eingebracht werden. Dabei liegt das unterste Register 4 an der Innenseite der Armierung 1 an. Das bzw. die oberen Register 4 weisen kürzere Verbindungsleitungen 7 auf, sodass die Anschlussleitungen 8 und 9 zwischen den Kammern 5, 6 des oberen Registers 4 nach oben geführt werden können.

Bei dieser Lösung ist es nur notwendig, die Anschlussleitungen 8 und 9 des unteren Registers 4 mit entsprechenden Verlängerungsleitungen vor Ort zu verbinden, d.h. man kommt mit nur zwei Verbindungsstellen (Schweißstellen) aus. Alle anderen Verbindungsstellen können bereits während der Herstellung der Register in kontrollierter Umgebung hergestellt werden.

Die Anschlussleitungen 8, 9 der Register 4 können oberhalb der oberen Stirnseite der Energiesäule entsprechend verbunden werden. So können die Register 4 einer Energiesäule parallel oder in Reihe geschaltet werden.

Die Armierung 1 besteht zumeist aus Stahl, aber darauf kommt es im Rahmen der vorliegenden Erfindung nicht an. Sie kann aus jedem geeigneten Material hergestellt werden.

## Patentansprüche

1. Energiesäule, insbesondere Pfeiler mit in diesem geführten Leitungen, die von einem Wärmeübertragungsmedium durchströmbar sind, **dadurch gekennzeichnet, dass** die Leitungen ein Register (4) bilden, wobei zwischen einer Vorlaufkammer (5) und einer Rücklaufkammer (6), die beide im Wesentlichen parallel zur Längsachse des Pfeilers verlaufen, parallel geschaltete bogenförmig verlaufende Verbindungsleitungen (7) angeordnet sind und eine Anschlussleitung (8) in den unteren Endbereich einer der Kammern (5, 6) mündet.

2. Energiesäule nach Anspruch 1, **dadurch gekennzeichnet, dass** die Leitungen (7, 8, 9) und Kammern (5, 6) aus Kunststoff hergestellt und miteinander verschweißt sind,

3. Energiesäule nach Anspruch 2, **dadurch gekennzeichnet, dass** der Kunststoff bis 90° hitzefest ist.

4. Energiesäule nach einem der Ansprüche 1 bis 3, **dadurch gekennzeichnet, dass** die Verbindungsleitungen (7) leicht schräg von der an ihrem unteren Ende mit einer Anschlussleitung (8) verbundenen Kammer (5) nach oben ansteigen.

5. Energiesäule nach einem der Ansprüche 1 bis 4, **dadurch gekennzeichnet, dass** zwei übereinander angeordnete Register (4) vorgesehen sind, wobei die Länge der bogenförmig verlaufenden Verbindungsleitungen (7) des oberen Registers (4) kleiner als jene der bogenförmig verlaufenden Verbindungsleitungen (7) des unteren Registers ist und die Anschlussleitungen (8, 9) des unteren Registers zwischen der Vorlauf- und der Rücklaufkammer (5, 6) des oberen Registers (4) nach oben herausgeführt sind.

6. Verfahren zur Herstellung einer Energiesäule nach einem der Ansprüche 1 bis 5, welche Säule mit einer Armierung (1) versehen ist, **dadurch gekennzeichnet, dass** ein vorgefertigtes ebenes Register (4) samt angefügten Anschlussleitungen (8, 9) gebogen und in ein Montagerohr (10) eingeschoben wird, wonach das Montagerohr (10) samt dem Register (4) in die Armierung (1) eingeschoben, danach das Montagerohr (10) herausgezogen und das gebogene Register (4) an der Armierung (1) befestigt wird, wonach die Armierung (1) samt dem Register (4) in die Erdbohrung eingebracht und diese ausgegossen wird.

7. Verfahren nach Anspruch 6, **dadurch gekennzeichnet, dass** das Register mit Flüssigkeit gefüllt und unter Druck gesetzt wird, bevor die Erdbohrung ausgegossen wird.
